# EUROPEAN PATENT SPECIFICATION

(11) **EP 1 061 014 B1**
(45) Date of publication and mention of the grant of the patent: **25.09.2002**
(21) Application number: 00111237.4
(22) Date of filing: 25.05.2000
(51) Int. Cl.: B65G 17/32

(54) **Take-up head for the grasping, movement and release of objects of diverse shape**
GREIFVORRICHTUNG ZUM ERFASSEN,FÖRDERN UND FREIGEBEN VON GEGENSTÄNDE UNTERSCHIEDLICHER DIMENSIONEN
Tête de préhension pour saisir, manipuler et libérer des objets de dimensions différentes

(30) Priority: 31.05.1999 IT BO990297
(43) Date of publication of application: 20.12.2000
(73) Proprietor: Cosmopack S.r.l., 41100 Modena (IT)
(72) Inventor: Vecchi, Celeste, 41100 Modena (IT); Campagnoli, Roberto, 40134 Bologna (IT); Lacinio, Salvatore, 40050 Monte Sanpietro, Bologna (IT)
(74) Representative: Gustorf, Gerhard, Dipl.-Ing.

(56) References cited:
- DE-A- 1 945 068
- DE-A- 2 134 985
- US-A- 4 329 110
- US-A- 5 718 323

## Description

### Field of the invention

-The invention relates to a take-up head for the grasping, movement and release of objects of diverse shape, particularly suitable for automatic packing machines.

-More specifically, the present invention relates to a take-up head of the above-mentioned type, particularly suitable for a conveyor/distributor system of objects of the closed loop type equipped with continuous motion, which is intended to grasp, in a take-up station, the objects disposed aligned along a longitudinal feed row, then to move them and distribute them methodically along two or more longitudinal rows transversely spaced apart which move them away, and then release them in a release station.

### Background of the invention

-A conveyor/distributor system of the.above-mentioned kind is known from US patent No. 4.632.238; briefly, it provides two conveyors, one lower and one upper with respect to an object conveyance/distribution path, in which the lower conveyor is intended to move a first lower take-up device intended to engage the bottom of the objects to be distributed for the purpose of supporting them during the said conveyance/distribution path, in which the said upper conveyor is intended to move a second upper take-up device intended to engage the top of the objects for the purpose of keeping them in a vertical attitude during the said conveyance/distribution path, and in which the said two take-up devices are controlled to move in reciprocal vertical alignment by means of the said conveyors.

-This conveyance/distribution system and the relative take-up devices have a number of disadvantages.

-A first disadvantage is due to the fact that they require the presence of a lower conveyor and an upper conveyor, as well as the presence of synchronization means intended to keep the lower take-up devices vertically aligned with the respective upper take-up devices, comprising the production of a complex and costly system which is difficult to manage.

-Further disadvantages are due to the fact that the said take-up devices do not ensure a reliable (positive) take-up of the object to be moved, they are not capable of operating with specific objects such as flexible bags and/or boxes and/or similar objects, and are not suitable for operating with diverse shapes of objects, i.e. they are not very flexible.

-A further conveyor/distributor system of the above-mentioned type is known from US patent 4.287.980; briefly, it provides an upper conveyor intended to carry in succession a plurality of upper take-up heads, in which the said heads have two take-up jaws, which can be moved reciprocally towards and away from each other by means of a sliding prismatic coupling, in which the said jaws are intended to grasp the cap of the objects to be handled, in this specific case bottles.

-This conveyance/distribution system and the relative take-up heads have the disadvantage that during the phase of movement for distribution from one into several rows, the bottles gripped in this way have their lower part dangling, with consequent risk of damage as a result of impacts against the guides of the distributor and/or against other bottles being handled, making it essential to employ reduced operating speeds, with a consequent low productive capacity in the unit of time of the relative system.

-Furthermore the said take-up heads do not enable objects such as bags and/or boxes and/or similar objects, i.e. objects not fitted with caps, to be handled.

Document US-A-4 329 110, on which the two-part form of claim 1 is based, discloses a manipulating device comprising two articulated linkages.

### Object of the invention

-The object of the present invention is to remedy the above-mentioned disadvantages.

### Summary of the invention

-The invention, which is characterized by the claims, solves the problem of creating a take-up head for the grasping, movement and release of objects of diverse shape particularly suitable for automatic packing machines in that the said take-up head is characterized in that it comprises: -a support body associated with conveying means for the movement of the said body; -a first articulated linkage having a frame carried by the said support body and a respective connecting rod intended to carry a first jaw; -a second articulated linkage having a frame carried by the said support body and a respective connecting rod intended to carry a second jaw, both disposed in mirror fashion and opposed with respect to the said first linkage and the said first jaw, and control means suitable for controlling the oscillation in opening of said two jaws of the said two articulated linkages.

-The following results are obtained by using the take-up head to which the present invention relates: it is possible to handle objects of diverse shape such as bottles and/or bags and/or boxes and/or similar objects; the objects do not dangle during the distribution phase; and, furthermore, it is possible to employ higher operating speeds.

-The advantages obtained by means of the present invention substantially consist of the fact that the said take-up head does not have to be replaced when the shape of the objects to be distributed changes; that the objects are not damaged during distribution as a result of impacts; and that the productive capacity per unit of time of the relative distribution system is increased.

### Brief Description of the Drawings

-Further features and advantages of the present invention will emerge more clearly from the detailed description below of a preferred embodiment, given purely by way of non-exhaustive example, and with reference to the illustrations in the accompanying drawings in which:
- Fig. 1 is a perspective view of the take-up head to which the invention relates, in closed and/or take-up position;
- Fig. 1A is a diagrammatic side view of the head of Fig. 1;
- Fig. 1B is a sectional view along 1 B-1 B of Fig. 1A;
- Fig. 1C is a view along 1C-1C of Fig. 1A;
- Fig. 2 is a perspective view of the head of Fig. 1 in the open and/or release position;
- Fig. 2A is a diagrammatic side view of the head of Fig. 2.

### Description of the Preferred Embodiment

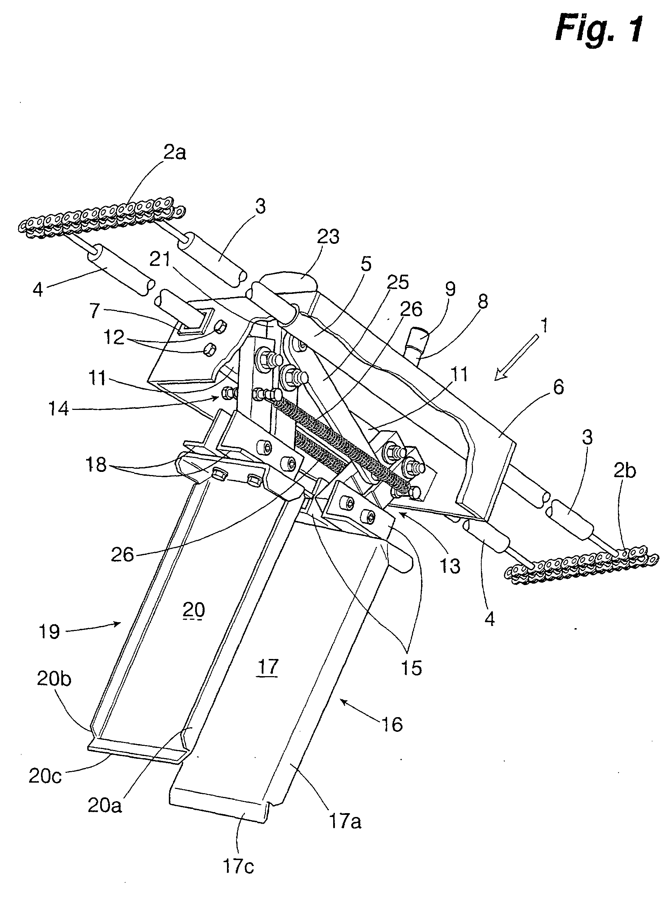

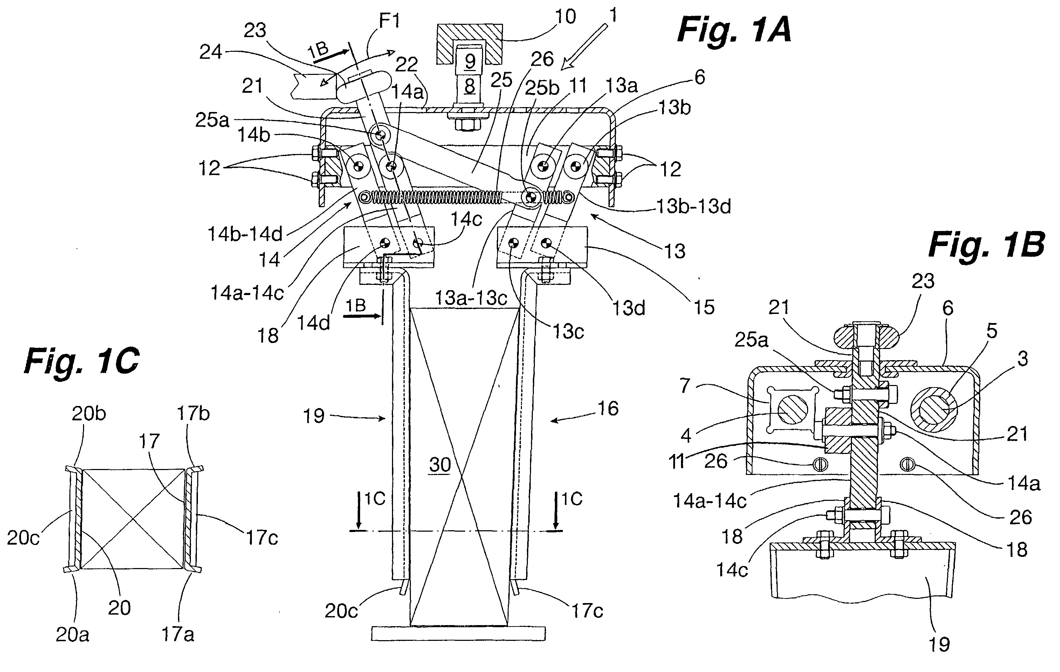

-With reference to Fig. 1, the take-up head to which the invention relates, denoted in its entirety by 1, is intended to be transported in known manner by means of a pair of chains 2a and 2b, which carry the ends of two transverse rods 3 and 4, in which the rod denoted by 3 couples in sliding manner with a precision bush 5 fixed to a box-type support body denoted by 6, see also Fig. 1B, and the rod denoted by 4 couples with play in sliding manner inside square holes denoted by 7 and produced in the support body 6.

-The support body 6 takes the form of a containment box open at the bottom, to the top of which is fixed a pin 8 fitted with a roller 9, the latter intended to cooperate with a known longitudinal guide way 10, see Fig. 1A, disposed along the distribution path, for the purpose of disposing the said support body 6 in an accurate transverse position during its longitudinal travel along the said path.

-Furthermore the same support body 6 internally comprises a crosspiece 11 which is fixed to the body 6 by means of screws 12 and carries, in proximity to its end portions, see Figs. 1 and 1A, two distinct articulated linkages, in particular two four-bar linkages, denoted by 13 and 14, disposed in mirror fashion and opposed with respect to each other, in which the first articulated linkage 13 has four rotoidal pairs (hinges) 13a, 13b, 13c and 13d intended to form a frame 13a-13b obtained in the crosspiece 11, an internal rocker arm 13a-13c, an external rocker arm 13b-13d, and a connecting rod 13c-13d formed by two pairs of counterfacing blocks denoted by 15, in which these latter carry in fixed manner a jaw 16 which has a grasping face 17 with inclined edges 17a, 17b and 17c, see also Fig. 1C; while the second articulated linkage 14 has four rotoidal pairs (hinges) 14a, 14b, 14c and 14d, intended to form a frame 14a-14b obtained in the crosspiece 11, an internal rocker arm 14a-14c, an external rocker arm 14b-14d and a connecting rod 14c-14d formed by two pairs of counterfacing blocks denoted by 18, in which these latter carry in fixed manner a jaw 19 which has a grasping face 20 with inclined edges 20a, 20b and 20c, see also Fig. 1C.

-The jaws 16 and 19, disposed opposed with respect to each other in mirror fashion, preferably have a length such as to contact the body of the objects 30 from the top downwards as far as close to the bottom of them or as far as a level slightly higher.

-The take-up head 1, furthermore, is provided with control means suitable for controlling the oscillation in opening of said jaws 16 and 19 of the said two articulated linkages 13 and 14 as described hereinafter.

-The internal rocker arm 14a-14c of the second articulated linkage 14 has a longitudinal extension 21, extending beyond the said box-type support body 6 and passing freely through a slot 22, in which at its free upper end the said extension has a roller 23 intended to cooperate with a longitudinal cam profile 24 disposed along the feed path of the said head 1, for the purpose of causing the said extension 21 and the relative rocker arm 14a-14c to oscillate on command in the direction shown by the arrow F1 as described in more detail below.

-Furthermore, hinged in 25a the said extension 21 carries an end of an interconnection element 25 which has its opposite end hinged in 25b on the internal rocker arm 13a-13c of the first articulated linkage 13.

-The two external rocker arms, 14b-14d and 13b-13d, are interconnected by means of resilient means which apply traction, such as, for example, one or two tension springs 26 disposed on the two opposite sides of the said external rocker arms 14b-14d and 13b-13d, for the purpose of causing the said two external rocker arms 14b-14d and 13b-13d to approach reciprocally and, consequently, bringing the jaws 16 and 19 into a position of approach/closure.

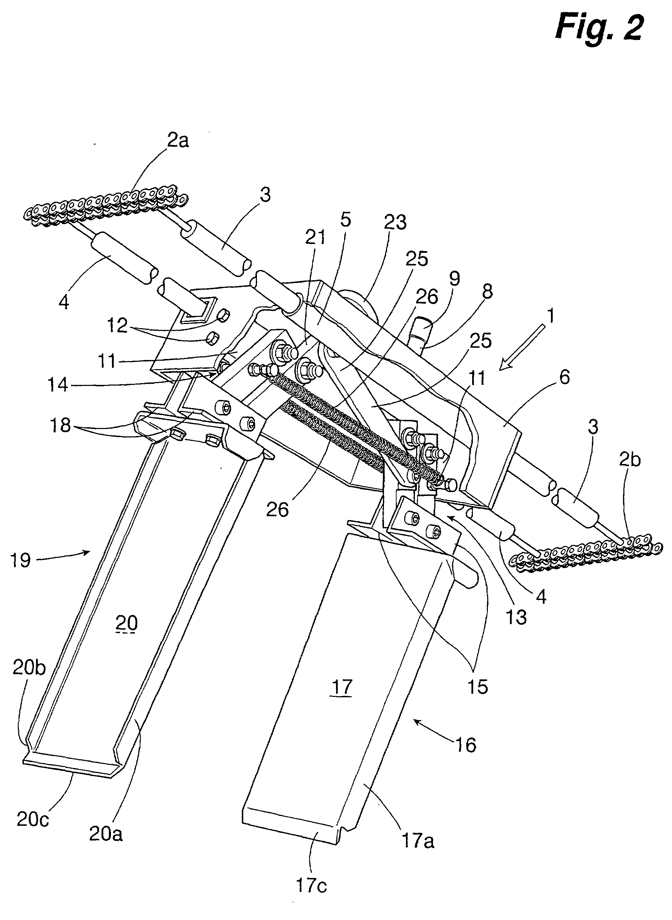

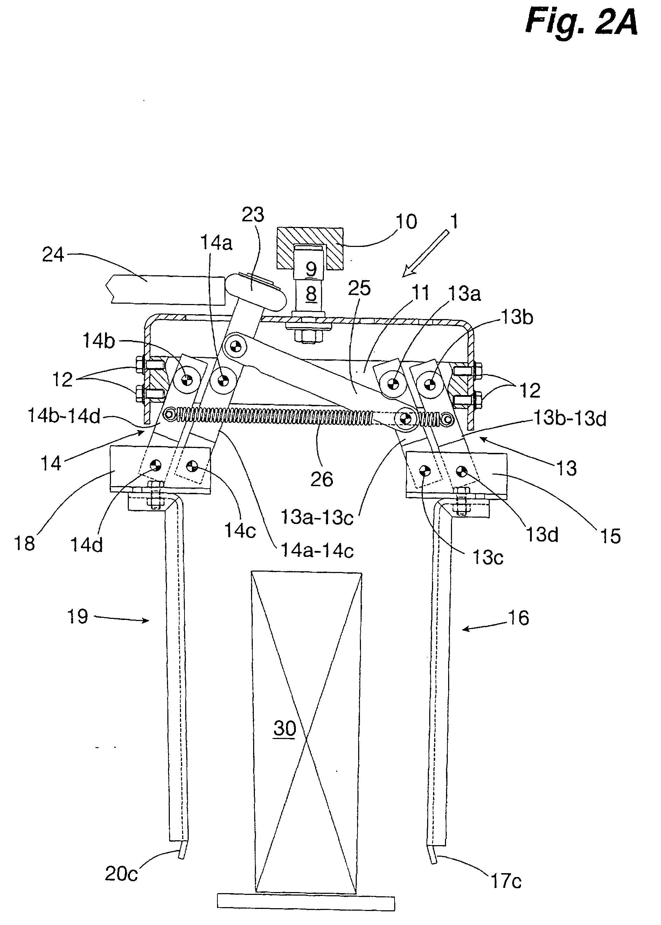

-With this arrangement, see Figs. 2 and 2A, the device 1 is disposed above the object 30 to be grasped with the jaws 16 and 19 in open position and with the springs 26 under tension, in that the said configuration is actuated by means of the roller 23 which slides on the longitudinal cam profile 24.

-In this configuration the operations of bringing the jaws 16 and 19 alongside the object 30 are facilitated by the inclined edges 17a, 17b, 17c of the jaw 16 and the inclined edges 20a, 20b, 20c of the jaw 19 which form an "invitation" chamfer to facilitate bringing the walls alongside the object 30 correctly.

-After having disposed the jaws 16 and 19 on two opposite sides of the object 30, to obtain the grasping configuration, steps are taken to modify and/or interrupt the longitudinal cam profile 24 on which the roller 23 slides, and the jaws 16 and 19, under the action of the springs 26, see Fig. 1A, are caused to approach reciprocally, with consequent grasping of the object 30.

-In this grasping configuration the jaws 16 and 19 grasp the object over virtually all its vertical extension and, therefore, the said object 30 is firmly held between the faces 17 and 20 of the said jaws 16 and 19 and thus prevented from sliding vertically downwards and/or dangling during the subsequent operations of movement for distribution.

-To obtain the release of the object 30, when the said take-up head 1 has reached the correct transverse and longitudinal position, see also Fig. 2A, it is sufficient for the roller 23 to encounter a further longitudinal cam profile 24, with consequent opening of the jaws 16 and 19 and consequent descent of the object 30 by gravity.

-With reference to the said take-up head 1, it should primarily be noted that the use of two articulated linkages, in particular two four-bar linkages, 13 and 14 for the movement of the jaws 16 and 19 enables the said jaws to approach and move away from each other reciprocally while maintaining a perfect parallelism between them, and thus enables the said device to be used to handle objects of different dimensions and/or diverse shape, such as bottles and/or bags and/or boxes and/or other objects for example.

-In this respect, furthermore, the grasping walls 17 and 20 of the jaws 16 and 19 may be coated with flexible material, such as polyurethane and/or rubber and/or another flexible material which has a high coefficient of friction, so as to permit a better hold of the object.

-Furthermore, the springs 26 which provide to cause the jaws 16 and 19 to approach each other again for grasping, and which therefore also determine the tightening force of the jaws 16 and 19 may easily be replaced, for the purpose of employing springs suitable for exerting a desired tightening force such as not to damage the object to be grasped but still permitting sufficient hold.

-The description of the take-up head to which the invention relates has been given purely by way of non-exhaustive example and it is clear, therefore, that all those modifications or variants suggested by practical experience and/or its use may be applied and still come within the scope of the claims which follow.

## Claims

1. Take-up head for the grasping, movement and release of objects of diverse shape particularly suitable for automatic packing machines comprising:
- a support body (6-11);
- a first articulated linkage (13) having a frame (13a-13b) carried by the said support body (11) and a respective connecting rod (13c-13d, 15) intended to carry a first jaw (16);
- a second articulated linkage (14) having a frame (14a-14b) carried by the said support body (11) and a respective connecting rod (14c-14d, 18) intended to carry a second jaw (19), both disposed in mirror fashion and opposed with respect to the said first linkage (13) and the said first jaw (16); **characterized in that** it comprises:
- control means (23, 21, 25, 26) suitable for controlling the oscillation in opening of said two jaws (16, 19) of the said two articulated linkages (13,14), and **in that** said support body is suitable for being associated with conveying means (3, 4, 9, 10) for the movement of the said body (6-11).

2. Take-up head according to Claim 1, **characterized in that** said first (13) and said second (14) articulated linkages are two four-bar linkages (13a, 13b, 13c, 13d, 13a-13b, 13a-13c, 13b-13d, 13c-13d / 14a, 14b, 14c, 14d, 14a-14b, 14a-14c, 14b-14d, 14c-14d)

3. Take-up head according to one of the preceding Claims, **characterized in that** the take-up surface (17, 20) of the said grasping jaws (16, 19) is covered with a specific material selected in relation to the object to be handled.

4. Take-up head according to one of the preceding Claims, **characterized in that** the said jaws (16, 19) have a length such as to contact the body of the objects (30) as far as close to the bottom of them or as far as a level slightly higher.

5. Take-up head according to one of the preceding Claims, **characterized in that** the said jaws (16, 19) have grasping faces (17, 20) with inclined edges (17a-17b-17c, 20a-20b-20c) which form an "invitation" chamfer to facilitate bringing the walls correctly alongside the object (30) to be grasped.

6. Head according to one of the preceding Claims, **characterized in that are** provided resilient means (26) suitable for bringing the said two jaws (16, 19) into a position of reciprocal approach.

7. Head according to claim 6, **characterized in that** the said resilient means (26) comprise at least one spring (26) intended to create a tensile stress between two rocker arms (14b-14d, 13b-13d) of the two distinct articulated linkages (13, 14) for the purpose of bringing the jaws (16, 19) into a closure position.

8. Head according to one of the preceding Claims, **characterized in that** the said control means comprise a longitudinal extension (21) of a rocker arm (14a-14c) of one (14) of the said two linkages and **in that** at its free upper end the said extension has a roller (23) intended to cooperate with a cam profile (24) disposed along the feed path of the said head (1).

9. Head according to one of the preceding Claims, **characterized in that** interconnection means (25) are provided between the said first articulated linkage (13) and the said second articulated linkage (14) suitable for transmitting the oscillation command between the said two articulated linkages (13, 14).

10. Head according to Claim 9, **characterized in that** the said interconnection means (25) comprise an element (25) having one end (25a) hinged on the said extension (21) of the rocker arm (14a-14c) of one articulated linkage (14) and the other end (25b) hinged on an rocker arm (13a-13c) of the other articulated linkage (13).

## Patentansprüche

1. Greifkopf zum Erfassen, Fördern und Freigeben von Gegenständen unterschiedlicher Form, insbesondere für den Einsatz in automatischen Verpackungsmaschinen, umfassend:
- einen Tragkörper (6-11);
- ein erstes Gelenkgestänge (13) mit einem von dem Tragkörper (11) gehaltenden Rahmen (13a-13b) und einer zugeordneten Koppelstange (13c-13d, 15) für die Aufnahme einer ersten Backe (16);
- ein zweites Gelenkgestänge (14) mit einem von dem Tragkörper (11) gehaltenen Rahmen (14a-14b) und einer zugeordneten Koppelstange (14c-14d, 18) für die Aufnahme einer zweiten Backe (19), wobei beide dem ersten Gelenkgestänge (13) und der ersten Backe (16) spiegelbildlich gegenüberliegen,
**dadurch gekennzeichnet,**
- **daß** der Greifkopf Steuermittel (23, 21, 25, 26) für die Betätigung der Schwenkbewegung zum Öffnen der beiden Backen (16, 19) der beiden Gelenkgestänge (13, 14) aufweist
- und **daß** der Tragkörper zur Verbindung mit Fördermitteln (3, 4, 9, 10) für die Fortbewegung des Tragkörpers (6-11) ausgebildet ist.

2. Greifkopf nach Anspruch 1, **dadurch gekennzeichnet, daß** das erste Gelenkgestänge (13) und das zweite Gelenkgestänge (14) aus zwei Gelenkvierecken (13a, 13b, 13c, 13d, 13a-13b, 13a-13c, 13b-13d, 13c-13d/14a, 14b, 14c, 14d, 14a-14b, 14a-14c, 14b-14d, 14c-14d) bestehen.

3. Greifkopf nach einem der vorhergehenden Ansprüche, **dadurch gekennzeichnet, daß** die Greifläche (17, 20) der Greifbacken (16, 19) mit einem entsprechend dem zu erfassenden Gegenstand ausgewählten Material beschichtet ist.

4. Greifkopf nach einem der vorhergehenden Ansprüche, **dadurch gekennzeichnet, daß** die Backen (16, 19) eine solche Länge haben, daß sie den Körper der Gegenstände (30) so weit wie möglich bis zu deren Boden oder kurz darüber berühren.

5. Greifkopf nach einem der vorhergehenden Ansprüche, **dadurch gekennzeichnet, daß** die Backen (16, 19) Greifflächen (17, 20) mit abgeschrägten Rändern (17a-17b, 17c, 20a-20b-20c) haben, die eine Einlauffase bilden, um ein korrektes Anliegen der Wände an dem zu ergreifenden Gegenstand (30) zu erleichtern.

6. Greifkopf nach einem der vorhergehenden Ansprüche, **dadurch gekennzeichnet, daß** elastische Mittel (26) vorgesehen sind, die dazu dienen, die beiden Backen (16, 19) in eine Position der gegenseitigen Annäherung zu bringen.

7. Greifkopf nach Anspruch 6, **dadurch gekennzeichnet, daß** die elastischen Mittel (26) wenigstens eine Feder (26) aufweisen, die eine Zugkraft zwischen zwei Schwingen (14b-14d, 13b-13d) der beiden Gelenkgestänge (13, 14) aufbringt, um die Backen (16, 19) in eine Schließstellung zu überführen.

8. Greifkopf nach einem der vorhergehenden Ansprüche, **dadurch gekennzeichnet, daß** die Steuermittel eine sich in Längsrichtung erstreckende Verlängerung (21) einer Schwinge (14a-14c) eines (14) der beiden Gelenkgestänge aufweist und daß die Verlängerung an ihrem freien Ende eine Rolle (23) trägt, die mit einem Nockenprofil (24) zusammenwirkt, das entlang der Fortbewegungsbahn des Greifkopfes (1) angeordnet ist.

9. Greifkopf nach einem der vorhergehenden Ansprüche, **dadurch gekennzeichnet, daß** zwischen dem ersten Gelenkgestänge (13) und dem zweiten Gelenkgestänge (14) Verbindungsmittel (25) vorgesehen sind, die den Schwenkbefehl zwischen den beiden Gelenkgestängen (13, 14) übertragen.

10. Greifkopf nach Anspruch 9, **dadurch gekennzeichnet, daß** die Verbindungsmittel (25) ein Element (25) aufweisen, von dem ein Ende (25a) an der Verlängerung (21) der Schwinge (14a-14c) eines der beiden Gelenkgestänge (14) angelenkt ist, während das andere Ende (25b) an einer Schwinge (13a-13c) des anderen Gelenkgestänges (13) angelenkt ist.

## Revendications

1. Tête de préhension pour saisir, déplacer et libérer des objets de diverses formes en particulier appropriée pour les machines de conditionnement automatiques,
comprenant :
- un corps de support (6-11) ;
- un premier élément de liaison articulé (13) ayant un cadre (13a-13b) porté par ledit corps de support (11) et une tige de liaison respective (13c-13d, 15) destinée à porter une première mâchoire (16) ;
- un second élément de liaison articulé (14) ayant un cadre (14a-14b) porté par ledit corps de support (11) et une tige de liaison respective (14c-14d, 18) destinée à porter une seconde mâchoire (19), disposée à la fois en miroir et en opposition par rapport audit premier élément de liaison (13) et à ladite première mâchoire (16) ; **caractérisée en ce qu'**elle comprend :
- des moyens de commande (23, 21, 25, 26) adaptés pour commander l'oscillation d'ouverture desdites -deux mâchoires (16, 19) desdits deux moyens de liaison articulés (13, 14), et **en ce que** ledit corps de support est adapté pour être associé avec des moyens de déplacement (3, 4, 9, 10) pour le déplacement dudit corps de support (6-11).

2. Tête de préhension selon la revendication 1, **caractérisée en ce que** lesdits premier (13) et second (14) moyens de liaison articulés sont deux moyens de liaison à quatre barres (13a, 13b, 13c, 13d, 13a-13b, 13a-13c, 13b-13d, 13c-13d/14a, 14b, 14c, 14d, 14a-14b, 14a-14c, 14b-14d, 14c-14d).

3. Tête de préhension selon l'une des revendications précédentes, **caractérisée en ce que** la surface de préhension (17, 20) desdites mâchoires de préhension (16, 19) est couverte avec un matériau spécifique sélectionné en fonction de l'objet à manipuler.

4. Tête de préhension selon l'une des revendications précédentes, **caractérisée en ce que** lesdites mâchoires (16, 19) ont une longueur choisie de façon à venir en contact du corps des objets (30) jusqu'à proximité de leur base ou jusqu'à un niveau légèrement au-dessus.

5. Tête de préhension selon l'une des revendications précédentes, **caractérisée en ce que** lesdites mâchoires (16, 19) ont des faces de préhension (17, 20) avec des bords inclinés (17a-17b-17c, 20a-20b-20c) qui forment un chanfrein "d'invitation" pour faciliter la disposition des parois correctement le long de l'objet (30) à prendre.

6. Tête selon l'une des revendications précédentes, **caractérisée en ce qu'**on prévoit des moyens élastiques (26) appropriés pour amener lesdites deux mâchoires (16, 19) en position d'approche réciproque.

7. Tête selon la revendication 6, **caractérisée en ce que** lesdits moyens élastiques (26) comprennent au moins un ressort (26) destiné à créer une force de tension entre deux bras de pivotement (14b-14d, 13b-13d) des deux moyens de liaison articulés distincts (13, 14) dans le but d'amener les mâchoires (16, 19) en une position de fermeture.

8. Tête selon l'une des revendications précédentes, **caractérisée en ce que** lesdits moyens de commande comprennent une extension longitudinale (21) d'un bras de pivotement (14a-14c) de l'un (14) desdits deux moyens de liaison et **en ce que** à son extrémité libre supérieure ladite extension comprend un galet (23) destiné à coopérer avec un profil de came (24) disposé le long du chemin d'alimentation de ladite tête (1).

9. Tête selon l'une des revendications précédentes, **caractérisée en ce que** des moyens d'interconnexion (25) sont prévus entre ledit premier élément de liaison articulé (13) et ledit second élément de liaison articulé (14) adaptés pour transmettre la commande d'oscillation entre lesdits deux moyens de liaison articulés (13, 14).

10. Tête selon la revendication 9, **caractérisée en ce que** lesdits moyens d'interconnexion (25) comprennent un élément (25) ayant une extrémité (25a) articulée sur ladite extension (21) du bras de pivotement (14a-14c) d'un moyen de liaison articulé (14) et l'autre extrémité (25b) articulée sur un bras de pivotement (13a-13c) de l'autre élément de liaison articulé (13).
